Europäisches Patentamt

European Patent Office

Office européen des brevets

(11) Publication number: **0 402 178**
**A2**

# (12) EUROPEAN PATENT APPLICATION

(21) Application number: **90306328.7**

(22) Date of filing: **11.06.90**

(51) Int. Cl.5: **A23P 1/12, A23L 1/217,**
**A23L 1/212**

(30) Priority: **09.06.89 GB 8913305**

(43) Date of publication of application:
**12.12.90 Bulletin 90/50**

(84) Designated Contracting States:
**AT BE CH DE DK ES FR GB GR IT LI NL SE**

(71) Applicant: **UNILEVER PLC**
**Unilever House Blackfriars P.O. Box 68**
**London EC4P 4BQ(GB)**

(84) **GB**

Applicant: **UNILEVER NV**
**Burgemeester s'Jacobplein 1 P.O. Box 760**
**NL-3000 DK Rotterdam(NL)**

(84) **BE CH DE DK ES FR GR IT LI NL SE AT**

(72) Inventor: **Bailey, John**
**Unilever Research Colworth Lab., Colworth**
**House**
**Sharnbrook, Bedford MK44 1LQ(GB)**
Inventor: **Birch, Robert**
**Unilever Research Colworth Lab., Colworth**
**House**
**Sharnbrook, Bedford MK44 1LQ(GB)**
Inventor: **Griffiths, Anne**
**Unilever Research Colworth Lab., Colworth**
**House**
**Sharnbrook, Bedford MK44 1LQ(GB)**
Inventor: **Stringer, John Vincent**
**Unilever Research Colworth Lab., Colworth**
**House**
**Sharnbrook, Bedford MK44 1LQ(GB)**

(74) Representative: **Keppels, Willem Richard**
**Engelbertus Gerardus, Drs. et al**
**Unilever N.V. Patent Division P.O.Box 137**
**NL-3130 AC Vlaardingen(NL)**

(54) **Vegetable product.**

(57) A food product comprising at least one phase of extruded vegetable foodstuff, preferably potato, and optionally other coextruded phases of vegetable or non-vegetable foodstuffs, in portions of at least one regularly folded or convoluted layer. The food product can be extruded onto a receiving surface to form at least one regularly folded or convoluted layer, separated into portions, and optionally treated to retain its shape, for example by frying.

## VEGETABLE PRODUCTS, AND PROCESSES FOR THEIR PREPARATION

This invention relates to vegetable products, and to processes for their preparation. In particular, the invention is applicable for example to potato products and their preparation.

The expression "vegetable" in this specification and claims is to be understood in a broad sense; also comprising root, tuber, bulb, flower, fruit and stem vegetables like carrots, swedes, turnips, celeriac, potatoes, onions, artichokes, tomatoes, aubergines, heart of palm, asparagus, all these being in an entirely or partly fresh, blanched, cooked, dried, marinated, enzymatically treated, comminuted, mashed or similarly treated form. As a main constituent, potato is preferred.

A number of industrially applicable methods for preparing vegetable products are known, including the use of various forms of extrusion device. For example, US 3 778 209 (Wallace) describes the coextrusion of an inner meat food and an outer mouldable food such as potato. US 3 761 282 (Shatila) also describes the simultaneous extrusion of a starchy tube, for example instant mashed potato, having a particulate filling, for example onion pieces. It is the purpose of these techniques to produce extruded vegetable products containing a second edible phase.

However, the range of textures and shapes available by such methods is limited, and it is an object of the current invention to provide mainly vegetable comprising at least one phase of mainly vegetable foodstuff material of novel structure, texture and appearance, and corresponding methods of manufacture. We have also surprisingly found it possible to provide coextrusions of vegetable matter and other food matter into shapes and textures previously unobtained. The invention relies on the manipulation of extrusion techniques, and the formulations of foodstuff material so extruded.

The invention provides a food product, comprising at least one layer of extruded mainly vegetable foodstuff material. By vegetable foodstuff we mean any whole vegetable (optionally peeled) which has been treated so as to render it fluid. Such a vegetable foodstuff must also have sufficient plasticity to allow it to be extrudable, and to retain its structure after extrusion.

A suitable fluidity and rheology for extrusion may be obtained by adding suitable binders, plasticising agents and/or setting agents such as modified starches, white of egg, cellulose ether binder etc. Instead or in addition pandrying may be effected.

Conveniently, the vegetable material can be for example mashed vegetables, such as potato. Processes according to the invention comprise extruding at least one layer of vegetable material such as mashed vegetable material onto a receiving surface such as a conveyor belt. Preferably, the layer of mashed vegetable material may be coextruded with another phase of foodstuff material, either vegetable or non vegetable. The regular folded or convoluted shape may conveniently be achieved by passing the foodstuff through a slotted extrusion outlet at a speed faster than the speed at which the surface on which it is received moves away from the extrusion outlet, whereupon the extruded foodstuff material forms a series of folds or convolutions. Apparatus for use in operating the invention comprises a take-off conveyor arranged to receive the output from the slotted extrusion means for producing the extruded vegetable material.

Optionally, the foodstuff may be prepared by extruding the vegetable foodstuff vertically down onto a receiving surface in such a manner so as to provide a folded vegetable food product. This may be done either by moving the extrusion outlet and the receiving surface horizontally to and fro relative to each other, or by keeping the receiving surface and the extrusion outlet static.

In certain embodiments of the invention, a slotted extrusion outlet can be arranged to extrude foodstuff on to a take off conveyor, which possibly carries another substrate such as a sequence of trays for the product. In other embodiments, a slotted extrusion outlet can be arranged to extrude the foodstuff onto a take-off conveyor, forming a continuous source of extruded foodstuff. The foodstuff is then cut to the required size. The cut foodstuff can then if required be pre-cooked to set the shape of the foodstuff, and then frozen and stored.

Food products produced according to the invention which have coextruded layers may have interesting flavour contrasts and appearances. For example, mashed potato may be coextruded with a coloured foodstuff, such as mashed carrot, mashed cabbage or mashed spinach, optionally with a carrier material to produce a striped effect. As well as vegetables and cheese, mashed potato may be coextruded with other fillings, such as a meat filling.

In one embodiment of the invention, shaped extrusion outlets (eg zig zag shaped) may be used to extrude the vegetable foodstuff, so as to provide not only a folded food product, but one which additionally has extra surface texture and detail. Such folded food products may have, for example, a spiky, wavey, or dimpled surface.

Most preferably, the shaped food product formed according to the invention is made from vegetable foodstuff materials which allow it to retain its structure after reheating.

Whilst the conditions of formulation and temperatures, etc., used for the components of the food products made as described herein are not absolutely critical, it has been found that the formulations of the extruded foodstuff. materials may preferably be optimised with respect to the demands of the extrusion process, and also any subsequent cooking steps.

Firstly, it has been found important to optimise the rheology of the extruded foodstuff materials, so that then the foodstuff materials are extruded or coextruded, the overall structure and any external structural features of the extruded food product hold in place and do not collapse under their own weight. Secondly, it is preferred that the extruded structure is subjected to a setting process, preferably by heating, for example deep frying for a short period of time. When this step is performed, and also in any subsequent cooking steps performed by for example a consumer, it is found that one or more of the phases of the extruded food product may contract. Contraction may differ between various phases of a coextruded product depending on the formulation of each phase, and therefore to minimise undesirable differential contraction between coextruded phases it is important that the potential degree of contraction of each phase be considered in the formulation of the final product.

During the extrusion process, it is important that the height and angle of extrusion outlets be adjusted above the surface onto which each extrudes its product, providing a small drop distance for foodstuff layers extruded onto the surface insufficient to cause distortion or narrowing of the extruded band, but enough to give reliable clearance. It is desirable to allow for adjustment of the clearances in operation, both to ensure fine control of the product formed, and to produce decorative effects where desired. It has also been found that the angle that the extrusion outlet makes with the receiving surface is important in determining the regularity of the pattern of folds or convolutions of the foodstuff so extruded.

Conveniently, where the loops of the folded food product are in contact with each other after extrusion, then these loops will adhere to each other either before or after any setting or heating process to help the food product retain its folded structure.

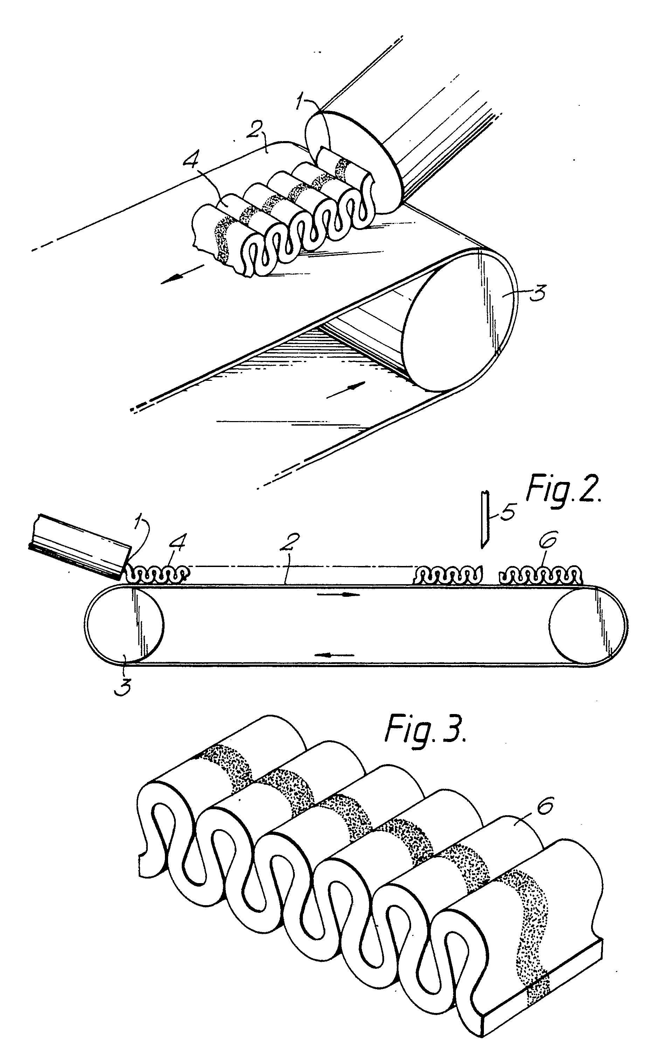

The accompanying schematic drawings, Figures 1, 2 and 3 and the following description show embodiments of the invention given by way of example only.

Referring to Figure 1 of the drawings there is shown an extrusion manifold for vegetable material comprising a 'post box' extrusion nozzle 1. Nozzle 1 can conveniently be between 20-80mm long, 3-8mm wide and is arranged approximately 3-25mm from the surface of the end roller 3 of conveyor belt 2. Nozzle 1 is connected to an inlet supply line (not shown) for a supply of mashed potato 4 to issue from the nozzle. Located within nozzle 1 is a second nozzle (not shown) connected to an inlet supply line for a flowable filling, for example, spinach filling, although the same vegetable material can be extruded through the second nozzle as by nozzle 1. Each nozzle has associated flow adjustment means (not shown) so that the extrusion rates through the different nozzles can be adjusted to desired proportions. Equipment and methods for providing one or more components to an extrusion outlet are well known in the art.

As shown in Figure 2, the take off conveyor belt 2 is part of an endless belt passing under a cutting knife 5, whereby each potato product 6 is cut from the mashed potato stream 4 and then removed from the conveyor belt and pre-fried (in means not shown) for 45 seconds in oil at 180-185°C to set the shape. The pre-fried potato product is then blast frozen and stored.

Figure 3 shows a perspective view of an example of a coextruded food product 6 produced by the above process.

Various factors affect the size and format of the vegetable product formed according to the invention. These include flow rate of foodstuffs through the extrusion nozzle(s), belt speed, nozzle to receiving surface angle, the gap between the nozzle and the receiving surface, and the rheological properties of the extruded materials. Depending on the actual foodstuff extruded, temperature of extrusion may also be important.

The food products so formed may be cooked if required by grilling, oven cooking, frying, or microwaving, or they may simply need heating prior to consumption.

Based upon the extrusion process described above, it is within the scope of the invention that several product designs can be made. For example, as shown above, the invention is not confined to a single phase of extruded vegetable material, but more than two phases of foodstuff material can be coextruded to form the food product. A food product according to the invention can also comprise two or more layers of foodstuff material extruded as herein described on top of each other. These interposed coextruded layers may optionally have interleaved another phase of foodstuff material. This interleaved layer may be placed on top of the first layer of extruded foodstuff material, optionally by spraying, dosing or extruding, before the second layer of extruded foodstuff material is coextruded on top.

Where a food product is produced comprising two or more layers of extruded material, as a broad guide it can be said that the extrusion nozzles for extruding successive layers of foodstuff material are upwardly stepped in height above the level of the first substrate by steps general corresponding to the order of magnitude of the thickness of the successive layers of extruded foodstuff.

In alternative embodiments for producing products with more than one layer on top of each other, not all nozzles of the second or subsequent layers need to be supplied from the same supply line as the nozzles providing the first coextruded layer, so that multilayer products with different compositions in different layers can be made.

Formula 1

Potato formulation for use in forming coextruded vegetable product. The following values are in percentages by weight.

| Potato granules | 27.0 |
| Cellulose ether binder | 0.5 |
| Water | to 100.0 |

Formula 2

Spinach filling composition for use in manufacture of coextruded vegetable product. The following values are in percentages by weight.

| Squeezed spinach puree | 15.0 |
| Cellulose ether binder | 0.5 |
| Salt | 1.0 |
| Potato granules | 25.0 |
| Water | to 100.0 |

It can be seen that any of the several features described herein can be combined and modified by the user within the scope of the invention.

Example 1

A food product is produced by extruding through a 60mm by 6mm post box nozzle a potato formulation of formula 1 onto the end roller of the conveyor belt as shown in Figures 1 and 2. A spinach filling of formula 2 is introduced via a 6mm nozzle into the stream of potato formulation just prior to extrusion, and extruded at ambient temperature. The rate of extrusion is such that the stream of potato forms a regularly folded or convoluted shape on the belt as shown in the drawings. The height and angle of the extrusion nozzle are adjusted such that the food product extruded has as regular a pattern as possible. In practice the height of the nozzle above the conveyor belt surface is approximately half the height of the extruded food product. The resulting coextruded food product is cut to length and prefried in oil for 30-60 seconds at 180-185° C, then subsequently blast frozen and stored, to give a product with the appearance of Figure 3.

**Claims**

1. A food product comprising at least one phase of extruded mainly vegetable foodstuff, preferably potato, and optionally other coextruded phases of vegetable or non-vegetable foodstuffs, in portions of at least one regularly folded or convoluted layer.

2. A fried and optionally frozen folded food product according to claim 1.

3. A folded food product according to claim 2 or claim 3 which has a textured (eg spikey, wavey or

4

dimpled) surface.

4. A process for producing a food product comprising the steps of extruding onto a receiving surface at least one phase of mainly vegetable foodstuff, preferably potato, and optionally other coextruded phases of vegetable or non-vegetable foodstuffs, to form at least one regularly folded or convoluted layer of the foodstuff, separating at least one layer of foodstuff into portions and optionally treating the portions to retain the shape, for example by frying.

5. Process according to claim 4 wherein the vegetable foodstuff is extruded onto a receiving surface which is moving away from the extrusion outlet at a slower rate than the rate of extrusion, thereby causing a regularly folded or convoluted food product to be formed.

Fig.2.

Fig.3.